# EUROPEAN PATENT APPLICATION

(11) **EP 4 623 751 A1**
(43) Date of publication of application: **01.10.2025**
(21) Application number: 24025003.5
(22) Date of filing: 31.01.2024
(51) Int. Cl.: A46B 5/00, A46D 1/00, A61C 17/26

(54) **THE SIWAK TOOTHBRUSH**

(71) Applicant: Alharbi, Nawal, Kuwait City (KW)
(72) Inventor: Alharbi, Nawal, Kuwait City (KW)
(74) Representative: V.O.

(57) **Abstract**

The siwak toothbrush is a head of the electric toothbrush with a brush of small piece of siwak. And it is clean the teeth with natural source. In addition, it has many advantages for mouth health. Moreover, it better than using the siwak long sticks.

## Description

### BACKGROUND

The siwak is a natural toothbrush used in the Arab culture. And it is made from natural sources like trees. In addition, it has many advantages for mouth health for example:
Fight plaque layer.
Fight gum disease.

Prevent cavities from spreading.

Keep the mouth heathy and clean.

It strengthens the enamel of the teeth.

The electric and manual toothbrush are both used to clean the teeth; however, the electric toothbrush is clean the teeth in much better than the manual toothbrush. So, people who use it has healthier gums and less decay.

Nowadays, there are many ideas to improve the use of the siwak for example:
(THIS MISWAK) is design to keep the siwak fresh for a long time. So, it has a miswak holder and cutter, which helps the user to cut and carry the miswak.

The miswak pen is design to keep the miswak fresh as long as we can. It is similar to the pen; however, it has an empty space to place the siwak inside it after using it. So, it is helpful for the users, but it is not practical. This is because it might get lost while using it.

(Ergonomic miswak toothbrush with replaceable brush heads) this idea is different from the siwak toothbrush for example: it needs a lot of work in order to shape the miswak to fit inside the toothbrush. On the other hand, the siwak toothbrush use the natural shape of the siwak and its width of it is not important. This is because we only cut it to small pieces and add a tip to help the miswak to be fixed into the hull of the toothbrush.

(Miswak toothbrush) this idea is different from the siwak toothbrush for instance: the brush head can lock in 180 degrees and 90 degrees position in relation to the handle. In contrast, the electric toothbrush can clean the teeth much better because it spins around the teeth.

(Electric toothbrush) it is different from the siwak toothbrush. This is because the head, which we use it to clean the teeth is made of natural sources like the miswak tree. And the similar part is that both use the same functions to clean the teeth.

### SUMMARY

By having a toothbrush with a head of siwak like the siwak electric toothbrush, which can clean the teeth with natural source. When the user uses the head of siwak in the electric toothbrush. So, he or she can protect his or her mouth health form using chemical products. And instead of that he or she can use the siwak because it is organic and good for their mouth health. Moreover, this invention easy to use. This is because of its steps:
At first, we replace the head of the siwak into the electric toothbrush.

Then we take the small piece of the siwak (it has base with a hull in order to fit it into the tip of the toothbrush).

Then after that the user set the toothbrush with the siwak. So, he or she can use it very easily like any toothbrush.

The new parts in the siwak toothbrush are:
The siwak with a base and hull.

The tip to enter the siwak into it.
the head of siwak that we can assemble it in the electric siwak toothbrush.

### PRIEF DESCREPTION OF THE DRAWING

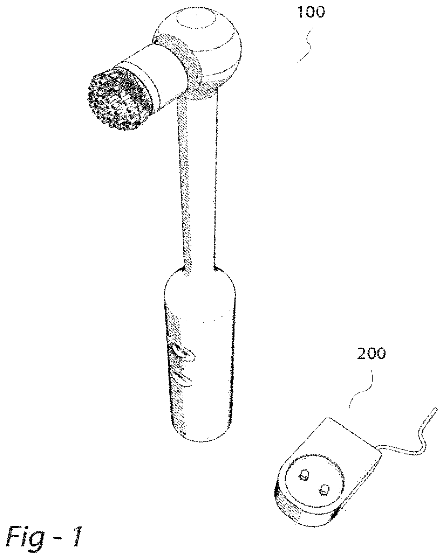

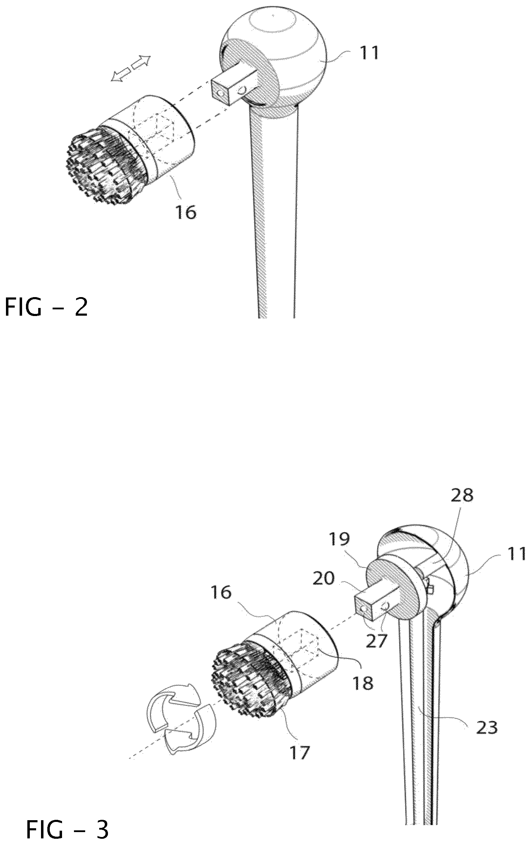

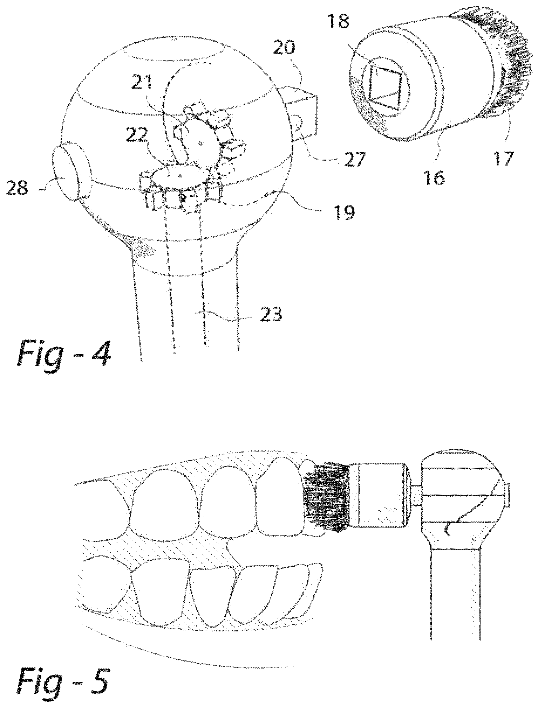

The new parts in the siwak toothbrush, which shows in Figure 1, Figure 2, Figure 3, Figure 4 and Figure5:
Part number 100 shows the electric toothbrush when we assembled the head of siwak into it. (Fig-1)
Part number 200 shows the charger of the electric siwak toothbrush. (Fig-1)
Part number 11 shows the gear alignment of the parts. (Fig-2)
Part number 16 shows the base of the natural siwak piece. (Fig-2)
Part number 17 shows the neutral piece of siwak. (Fig-3)
Part number 18 shows the hull in the base of the siwak. (Fig-4)
Part number 19 shows the fixing cylinder. (Fig-3)
Part number 20 shows the tip of the toothbrush. (Fig-3)
Part number 21 shows the toothbrush transmission gear. (Fig-3)
Part number 22 shows the gear mounted on the transmission shaft. (Fig-3)
Part number 23 shows the transmission shaft. (Fig-3)
Part number 27 shows the button of the tip of the toothbrush. (Fig-3)
Part number 28 shows the button of the toothbrush. (Fig-4)
(Fig-5) shows the use of the siwak toothbrush.

### DETAIL DESCREPTION

The siwak toothbrush that has new parts. Which can benefit the people who know the advantages of the siwak. And the new parts are:
1. Part number 100 shows the electronic toothbrush when we assembled the head of siwak into it. (Fig-1) (For people who prefer using electronic toothbrush)
2. Part number 200 shows the charger of the electronic siwak toothbrush. (Fig-1) it helps charge the toothbrush in order to work efficiently for a longer time.
3. Part number 11 shows the gear alignment of the parts. (Fig-2) this part is the gather of all gears.
4. Part number 16 shows the base of the natural siwak piece. (Fig-2) the siwak comes from natural souses like trees. So, we cut it to small pieces almost 2 cm (height). However, we cannot control the width of the siwak pieces because it is natural. So, we design this base to seize on the siwak. In addition, it helps to keep it fixed inside the base.
5. Part number 17 shows the natural piece of the siwak after we pill of the first layer of it. In order to make it easy to use and clean the teeth. (Fig-3)
6. Part number 18 shows the hull of the siwak base. So, this hull is important because it helps the siwak base to fit inside the tip of the toothbrush and be fixed. Also, it has a safety system. (The square shape of it helps the toothbrush to spins without being scared of any fall of siwak base) (Fig-3)
7.Part number 19 shows the fixing cylinder. (Fig-3) this part is attaches to the piston and extends from the cylinder through the rod-end head.
8.Part number 20 shows the tip of the toothbrush. (Fig-3) this part helps to fit the base of siwak inside it. In order to keep it fixed and spin with it.
9. Part number 21 shows the toothbrush transmission gear. (Fig-3) this part is changing the speed and torque in relation to engine speed and torque.
10. Part number 22 shows the gear mounted on the transmission shaft. (Fig-3) this part is to increase the torque while reducing the speed of the main output shaft.
11. Part number 23 shows the transmission shaft. (Fig-3) this part rotate member and transmit power and torque from one location to another.
12. Part number 27 shows the tip points. (Fig-3) this part helps the tip of the toothbrush to fit inside the point hull of the base hull.
13. Part number 28 shows the button of the toothbrush. (Fig-4) this part helps the user to press on it in order to change the base of the siwak. This is because the user uses this base just ones. (When the user presses it the tip points enter inside the tip in order to make the way of changing very easy)
14. (Fig-5) shows the use of the siwak toothbrush. The siwak base and the toothbrush are attached to each other without any space. So, the user can clean his teeth very easily.

### ADVANTAGES

There are many advantages from using the head of siwak toothbrush such as:
It is easy to use. The electric toothbrush, which can be extremely easy for the elderly and children. Also, for people with special needs.

It is made of natural material. So, it is safe for all people. And it is having a lot of benefits for the mouth health.

It is saved time and effort especially when they use the siwak electric toothbrush.

The electric toothbrush cleans the teeth efficiently. This because it spins on the teeth.

## Claims

1. The unique parts in the siwak head of the electric toothbrush are made for people who like to use electric toothbrush. Especially, for people who prefer to use siwak. In addition, it is healthy for all people because it is from natural sources. Therefore, the new parts in the siwak head of the electric toothbrush that we claimed are:
The siwak head of the electric toothbrush:
the siwak head, which we design to be ready to use. And it designed has a rounded base with two sides. The first side has a square hull. And it is important for the siwak to be fixed in the tip of the brush and move and spins with it without fill down. Moreover, the second side is for the siwak that we remove the first layer of it. And then we set it inside the round base. Finally, the siwak will be prepared to use.

2. the round base of the siwak can fit inside it any size of siwak sticks. This because we cannot control it width. In addition, it is grown naturally in different width.

3. based on claim 1the siwak with a hull, which we can set it into the tip of the electric toothbrush. In order to spin to clean the teeth.

4. the head of the siwak that we will assemble it into the electric toothbrush. In order to make the head works. (this head can be assembled to any type of electric toothbrush.) This head spins with the spins of the electric toothbrush. So, the user can use it in the same way of the electric toothbrush.

5. the electric toothbrush that has a button in the upper side of it. And this button is needed to click it in order to change the siwak after using it (to change the siwak each time). The second click, is after fitting the siwak inside the tip and keep it from fill down. (Safety system)
